Europäisches Patentamt

European Patent Office

Office européen des brevets

(19)

(11) Publication number : **0 496 559 A2**

(12) **EUROPEAN PATENT APPLICATION**

(21) Application number : **92300466.7**

(22) Date of filing : **20.01.92**

(51) Int. Cl.$^5$ : **G11B 23/38, G11B 23/28, G11B 23/04, G11B 5/78**

(30) Priority : **24.01.91 JP 24141/91**
**24.01.91 JP 24143/91**
**19.04.91 JP 115627/91**

(43) Date of publication of application :
**29.07.92 Bulletin 92/31**

(84) Designated Contracting States :
**DE FR GB**

(71) Applicant : **KONICA CORPORATION**
**26-2, Nishi-shinjuku 1-chome Shinjuku-ku**
**Tokyo (JP)**

(72) Inventor : **Koyama, Noboru**
**Konica Corporation, 1 Sakura-machi**
**Hino-shi, Tokyo (JP)**

Inventor : **Ezaki, Atsuo**
**Konica Corporation, 1 Sakura-machi**
**Hino-shi, Tokyo (JP)**
Inventor : **Nakano, Yasushi**
**Konica Corporation, 1 Sakura-machi**
**Hino-shi, Tokyo (JP)**
Inventor : **Ishiguro, Shu**
**Konica Corporation, 1 Sakura-machi**
**Hino-shi, Tokyo (JP)**
Inventor : **Goto, Narito**
**Konica Corporation, 1 Sakura-machi**
**Hino-shi, Tokyo (JP)**
Inventor : **Nakamura, Issei**
**Konica Corporation, 1 Sakura-machi**
**Hino-shi, Tokyo (JP)**

(74) Representative : **Brock, Peter William et al**
**URQUHART-DYKES & LORD 91 Wimpole**
**Street**
**London W1M 8AH (GB)**

(54) **Magnetic tape and tape cassette.**

(57)    A tape or a cassette housing said tape in which a non-magnetic colored layer is provided adjacently to a support and said non-magnetic colored layer is colored in a hue different from a magnetic recording layer.

The tape or tape cassette can be readily distinguished from pirated editions by the difference in color as stated above. Further, even if a pirate attempts to make similar articles by processing raw tapes, it is hardly accomplished.

# Fig. 1

EP 0 496 559 A2

The present invention is related to a magnetic tape and a tape cassette.

With the incoming of the so-called AV (audio-visual) age, demand and production for packaged visual media are noticeably increasing in recent years. Particularly, an enormous amount of raw video tapes and video goods containing music, movies, animations and stage-plays are consumed every day as articles for sale or as rental video tapes.

In business of video tapes, it is increasing, with the spread of video appliances, that ones who are not copyright proprietors nor rightful persons approved thereby dub contents of video tapes recorded through regular procedures and sell them in large quantities as the so-called pirated editions.

In such video tape business circles infested with pirated editions, regular manufactures and traders are anxious to prevent the flow of pirated editions. Therefore, there is eagerly awaited an effective technical measure to uproot such pirated editions for protecting the interest of the whole video tape industry.

As such preventive measures, there have been tried, for example, to use hologram seal or to color lids attached to the front of tape cassettes.

However, these measures are not effective in preventing the flow of pirated editions since these can be easily imitated by manufactures of pirated editions.

On the other hand, Japanese Pat. O.P.I. Pub. No. 231426/1987 discloses a magnetic recording medium in which the magnetic layer is divided into an upper layer and a lower layer containing a pigment or dye, so that the lower layer has a color different from the upper layer. Though it discloses that coating defects and coating unevenness of the upper layer can be detected by the color of the lower magnetic layer, it is not clear whether or not pirated editions can be found from the color of a lower layer. Moreover, there is neither taught nor suggested at all an idea to color a lower layer for the purpose of preventing pirated editions.

Further, since a pigment or a dye contained in a lower magnetic layer is mixed with a magnetic powder (generally, dark brown) in the same layer, the contrast with an upper layer is dull; moreover, the electromagnetic conversion property of a lower layer tends to be adversely affected by the pigment contained in a large amount.

## SUMMARY OF THE INVENTION

An object of the present invention is to provide a magnetic tape and tape cassette difficult to imitate, readily recognizable as a lawful commercial article by purchasers, and thereby capable of preventing the appearance of pirated editions effectively.

Another object of the invention is to provide a cassette containing said magnetic tape.

The other object of the present invention is to provide a magnetic tape and tape cassette is improved in electromagnetic conversion characteristics and running property.

As stated above, a magnetic tape of the present invention has a support, a magnetic recording layer provided thereon and a non-magnetic colored layer provided adjacently to the support, wherein the non-magnetic colored layer is colored in a hue different from the magnetic recording layer.

Also, the present invention is to provide a tape cassette consisting of a magnetic tape to record magnetically prescribed signals such as picture signals and aural signals, and a cassette case to house the magnetic tape, wherein the magnetic tape has a support, a magnetic recording layer provided on the support and a non-magnetic colored layer provided adjacently to the support, and said non-magnetic colored layer is colored in a hue different from said magnetic recording layer.

Further, the present invention is to provide a tape cassette consisting of a magnetic tape to record magnetically prescribed signals such as picture signals and aural signals, and a cassette case to house the magnetic tape, wherein said magnetic tape has a support, a magnetic recording layer provided on the support and a non-magnetic colored layer provided between the support and the magnetic recording layer, and said non-magnetic colored layer is colored in a hue different from said magnetic recording layer, and said difference in color makes it possible to judge whether said video tape cassette is a pirated edition or not.

The other side of said support than that having a magnetic recording layer is preferably provided with projections of the following characteristics:

(a) the average projection height is 0.01 to 0.2 $\mu$m;

(b) the number of projections of a height exceeding 0.01 $\mu$m is not less than 50 for a measured length of 1 mm;

(c) the number of projections of a height exceeding 0.3 $\mu$m is not more than 1,000 for a measured length of 400 mm; and

(d) the ratio of the maximum projection height to the average projection height is not more than 10.

In one aspect of the invention, there is provided a magnetic tape comprising a non-magnetic support and a magnetic recording layer provided on its one side, wherein said magnetic tape is provided with a means to form a prescribed pattern that is recognizable from the other side of said non-magnetic support.

In another aspect of the invention, there is provided a cassette comprising a magnetic tape capable of magnetically recording a prescribed signal and a cartridge housing said magnetic tape, wherein said magnetic tape comprises a non-magnetic support and a magnetic recording layer formed on its one side; said magnetic tape being provided with a means to form a prescribed pattern that is recognizable from the other side of said non-magnetic support.

In still another aspect of the invention, there is provided a videocassette comprising a magnetic tape on which a described signal has been recorded and a cartridge housing said magnetic tape, wherein said magnetic tape comprises a non-magnetic support and a magnetic recording layer formed on its one side; said magnetic tape being provided (preferably between the non-magnetic support and the magnetic recording layer) with a means to form a prescribed pattern that is recognizable from the other side of said non-magnetic support, thus enabling said videocassette to be distinguished from its illegal copies.

## BRIEF DESCRIPTION OF THE DRAWINGS

Fig. 1 A sectional view of an example of the magnetic tape according to the invention.
Fig. 2 A sectional view of another example of the magnetic tape according to the invention.
Fig. 3 A sectional view of a third example of the magnetic tape according to the invention.
Fig. 4 A plane view of a video tape cassette according to the invention.
Fig. 5 A V-V line sectional view of Fig. 4.
Fig. 6 An oblique view, from the back side, of the same video tape cassette with its lid open.
Fig. 7 An oblique view of an example of the magnetic tape according to the invention.
Figs. 8 - 11, 15, 18 and 19. A sectional view of each of other examples of the magnetic tape.
Figs. 12 to 14, 16 and 17. A schematic view of the preparation method of the magnetic tape.

## DETAILED DISCLOSURE OF THE INVENTION

In these magnetic tape, tape cassette and tape cassette for video recording, when the non-magnetic colored layer is formed to contain a white pigment and a color pigment or a color dye as a preferable embodiment of the invention, the color of the non-magnetic colored layer, viewed from the support side opposite to the magnetic layer, can be clearly distinguished from that of the magnetic layer, because the color of the magnetic layer (usually dark brown) is screened or weakened by the white pigment. In this case, the color of the non-magnetic layer may be made into a pastel shade of a color pigment mixed with a white pigment.

The above support is preferred to be optically transparent. The term "optically transparent" used here means that the support is transparent to visible light, or not perfectly transparent but capable of transmitting visible light to the extent of allowing the color of inner layers to be distinguished.

Besides a non-magnetic layer containing at least one coloring agent (color pigment or dye) of a specific color and a binder, the above "non-magnetic colored layer" may include, as also mentioned later in the examples, a non-magnetic layer containing a coloring agent and a white pigment as described above, or a non-magnetic white layer consisting of a white pigment and a binder. In this case, the non-magnetic colored layer may consist of not only a single layer but two or more layers. For example, there may be provided a white layer on the magnetic layer side and a colored pigment layer via this white layer.

## EXAMPLES

The examples of the invention are hereunder described.

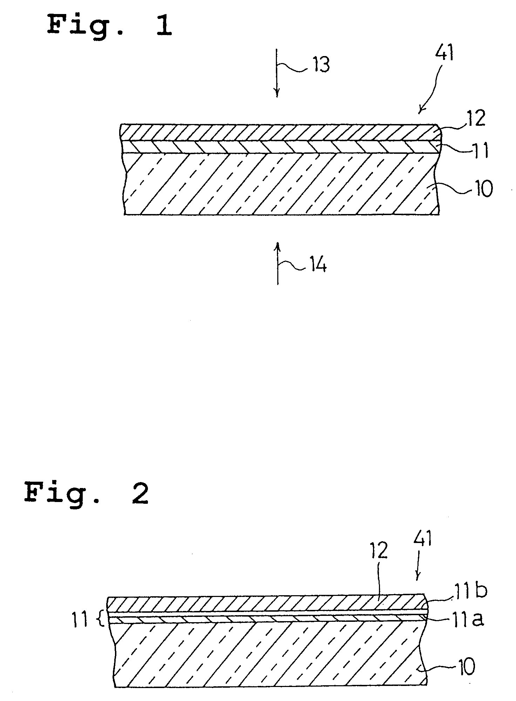

Figs. 1 to 3 show respective magnetic tapes according to the first invention of the present invention.

Tape 41 shown in Fig. 1 is obtained by forming non-magnetic colored layer 11 and magnetic layer 12 on one side of transparent base film 10.

As ferromagnetic powders contained in magnetic layer 12, there are used oxide magnetic materials such as $\gamma$-Fe$_2$O$_3$, Co-containing $\gamma$-Fe$_2$O$_3$, Co-coated $\gamma$-Fe$_2$O$_3$, Fe$_3$O$_4$, Co-containing Fe$_3$O$_4$, Co-coated Fe$_3$O$_4$, Co-containing magnetic FeOx (3/2>x>4/3) and CrO$_2$. Hexagonal ferrites, such as barium ferrite, and iron nitride can also be used.

Ferromagnetic metal powders can also be used. Examples thereof include metal magnetic powders having a main component of Fe, Ni or Co; such as Fe, Ni, Co, or Fe-Al type, Fe-Al-Ca type, Fe-Al-Ni type, Fe-Al-Zn type, Fe-Al-Co type, Fe-Ni type, Fe-Ni-Co type, Fe-Ni-Si-Al-Mn type, Fe-Ni-Si-Al-Zn type, Fe-Al-Si type, Fe-Ni-Zn type, Fe-Ni-Mn type, Fe-Ni-Si type, Fe-Mn-Zn type, Fe-Co-Ni-P type or Co-Ni type. These metal powders may contain an element such as Cu, Cr or a compound thereof as an additive.

There may be added in magnetic recording layer 12 a lubricant (for example, silicone oil, graphite, molybdenum disulfide, tungsten disulfide, monobasic fatty acid of 12 to 20 carbon :toms such as stearic acid or fatty ester of 13 to 40 carbon atoms), an abrasive (for example, $\alpha$-Al$_2$O$_3$), an antistatic agent (for example, carbon black, graphite) and a dispersant (for example, powder lecithin).

As binders used in the magnetic recording layer, those having an average molecular weight of about 10,000 to 200,000 are preferred; these binders may also be applicable to non-magnetic colored layer 11. Examples thereof include vinyl chloride-vinyl acetate copolymer, vinyl chloride-vinylidene chloride copolymer, vinyl chloride-acrylonitrile copolymer, polyvinyl chloride, urethane resin, butadiene-acrylonitrile copolymer, polyamide resin, polyvinyl butyral, cellulose derivatives, (cellulose acetate butylate, cellulose diacetate, cellulose triacetate, cellulose propionate, nitrocellulose), styrene-butadiene copolymer, polyester resin, various synthetic rubbers, phenol resin, epoxy resin, urea resin, melamine resin, phenoxy resin, silicone resin, acrylic type reactive resin, mixtures of high molecular polyester resin and isocyanate prepolymer, mixtures of polyester polyol and polyisocyanate, urea formaldehyde resin, mixtures of low molecular glycol/high polymer diol/isocyanate, and mixtures of them.

In view of dispersibility of magnetic powders, it is preferable that these binders contain at least one polar group selected from -SO$_3$M, -OSO$_3$M, -COOM and PO(OM')$_2$, where M represents a hydrogen atom, or an alkali metal atom such as Na, K, Li; and M' represents a hydrogen atom, an alkali metal atom such as Na, K, Li, or an alkyl group.

Besides the above binder, non-magnetic colored layer 11 contains a white pigment such as alumina, titanium oxide, a green pigment such as chromium oxide, a yellow pigment such as chrome yellow, or a red pigment such as iron oxide red. The particle size of these pigments is preferably 0.1 to 10 $\mu$m and especially 0.1 to 2 $\mu$m.

On the opposite side of the support 10 (the side indicated by arrow 14 in Fig. 1), projections having the following characteristics are provided.

(a) the average projection height is 0.01 to 0.2 $\mu$m, preferably 0.01 to 0.15 $\mu$m, still preferably 0.01 to 0.10 $\mu$m;

(b) the number of projections of a hight exceeding 0.01 $\mu$m is not less than 50, preferably 100 to 10,000, still preferably 200 to 1000, for a measured length of 1 mm;

(c) the number of projections of a height exceeding 0.3 $\mu$m is not more than 1,000, preferably not more than 400, still preferably not more than 100, for a measured length of 400 mm;

(d) the ratio of the maximum projection height to the average projection height is not more than 10, preferably 1.0 to 7.0, still preferably 1.0 to 5.0.

The surface roughness of the support depends on the kind of a polymerization medium for a raw material polymer or inorganic particles to be added to the polymer. In the case of a polyethylene terephthalate film support, an oxide such as SiO$_2$, TiO$_2$, CaCo$_3$ and Al$_2$O$_3$ or an inorganic salt (hereinafter referred to as "a filler") is added to a raw material polymer at the stage of polymerization or at the stage of melting polymer pellets, followed by successive biaxial orientation (described in Japanese Patent Examined Publication No. 5639/1955). It is preferred that fillers be spherical and have a sharp size distribution. The filler particles must be dispersed uniformly in the support. To attain such uniform dispersion, care should be taken in selecting a kneader to be used in melting polymer pellets.

If the average projection height is less than 0.01 $\mu$m, the opposite side of the support becomes too smooth, resulting in considerable determination of running durability. When the average projection height exceeds 0.2 $\mu$m, the surface of the magnetic layer also becomes rough, causing the electromagnetic conversion characteristics of the tape to be deteriorated.

If the number of projections of a height 0.01 $\mu$m or more is less than 50, the tape will have a considerably poor running durability. When the number of projections of a height 0.3 $\mu$m or more exceeds 1,000, the support will get a lot of scratches during running.

If the ratio of the maximum projection height to the average projection height exceeds 10, the electromagnetic conversion characteristics of the tape, in particular, SN(AM) components of chroma, will be deteriorated.

Non-magnetic colored layer 11 may contain, instead of or in combination with the above pigment, a phthalocyanine dye, azo dye, anthraquinone dye, indigoid dye, nitro or nitroso dye, quinoline dye, methine dye, thiazole dye, quinoneimine dye, azine dye, oxazine dye, thiazine dye, azoic dye, diphenylmethane dye, triphenylmethane dye, xanthene dye, acridine dye, oxidation dye, sulfur dye, phthalein dye, aminoketone dye or oxyketone dye.

In non-magnetic layer 11, the content of pigments or dyes is preferably 100 to 10,000 parts by weight and especially 300 to 3,000 parts by weight per 100 parts by weight of binder.

The thickness of non-magnetic layer 11 is preferably 0.1 to 10 $\mu$m, especially 0.5 to 6 $\mu$m.

Support 10 may be made of a non-magnetic transparent plastic material. Examples thereof include polyesters such as polyethylene terephthalate, polyethylene-2,6-naphthalate; polyolefines such as polypropylene;

cellulose derivatives such as cellulose triacetate, cellulosediacetate; polyamide; and polycarbonate.

The thickness of support 10 is preferably about 3 to 100 μm, especially 5 to 50 μm.

To form non-magnetic colored layer 11 and magnetic recording layer 12 on support 10, there may be applicable either a method in which a preceding coated layer is dried and then a succeeding layer is coated thereon (so-called wet-on-dry coating method) or a method in which a succeeding layer is simultaneously or sequentially coated on an undried wet preceding layer (so-called wet-on-wet coating method). It is preferred to carry out a simultaneous multilayer coating by the wet-on-wet multilayer coating method in view of adhesion of coated films and surface smoothness. An isocyanate curing agent is advantageously added to a magnetic coating composition; such a curing agent can also be added to a coating composition for non-magnetic colored layer.

In magnetic tape 41 formed as stated above, the color of magnetic recording layer 12 (usually dark brown) can be seen from the direction 13 of magnetic recording layer 12 side, while the color of non-magnetic layer 11 (white, for example) can be seen from the opposite direction 14 through transparent support 10.

In case a white pigment and a color pigment are contained in non-magnetic layer 11, the color of non-magnetic layer 11 can be clearly distinguished from that of magnetic recording layer 12, when viewed from the direction of 14, because the color of magnetic recording layer 12 (usually dark brown) is screened or weakened by the white pigment. In this case, the color of non-magnetic layer 11 can be made into a pastel shade of a color pigment mixed with white.

When a tape is made into the structure shown in Fig. 1 and housed in a tape cassette as described later, it can be a useful preventive measure against pirated editions, because this tape can be readily distinguished from a tape which is manufactured otherwise and might be a pirated edition by the fact whether or not the colors viewed from the directions of 13 and 14 are different from each other. In other words, the colors observed from the directions of 13 and 14 are the same in a pirated edition, since it has no non-magnetic layer 11.

Moreover, a tape of Fig. 1 according to the invention can be hardly counterfeited, even if a pirate attempts to make a similar one by processing a raw tape. Limitation is therefore prevented. Further, tape makers can apply a peculiar color to their tapes by selecting a desirable color.

Unlike the processing of a housing case of a tape cassette, the identification means is given to a tape itself housed in a cassette; therefore, an imitator cannot help but process a video tape itself.

In the above tape (including the tape described later), the difference in color is preferably within the following limits.

That is, the colors of tape 41 are examined from the upper side 13 and the reverse side 14 with a color analyzer (CMS-1200 made by Murakami Shikisai) to determine L*, a*, b*, and a color difference $E^*_{ab}$ is calculated from them (this is prescribed in the color specification system CIELAB recommended by Commission Internationale de l'Eclairage in 1976). In forming such a tape, it is preferable that the difference in $E^*_{ab}$ between the reverse side 14 and the right side 13 {$\Delta E^*_{ab}$ (reverse) - $\Delta E^*_{ab}$ (right side)} be 5.0 or more and particularly 10.0 to 100.0.

Since non-magnetic colored layer 11 and magnetic recording layer 12 in the tape of Fig. 1 are formed separately, the tape provides a better contrast for distinguishing their colors than the case of adding a pigment in magnetic recording layer 12, and magnetic recording layer 12 is not adversely affected in electromagnetic conversion properties. Moreover, non-magnetic colored layer 11 is not exposed to the outside, therefore it does not peel off when rubbed with a running system. Further, it has a subbing effect, being formed between magnetic recording layer 12 and support 10, to enhance the adhesive strength of magnetic recording layer 12.

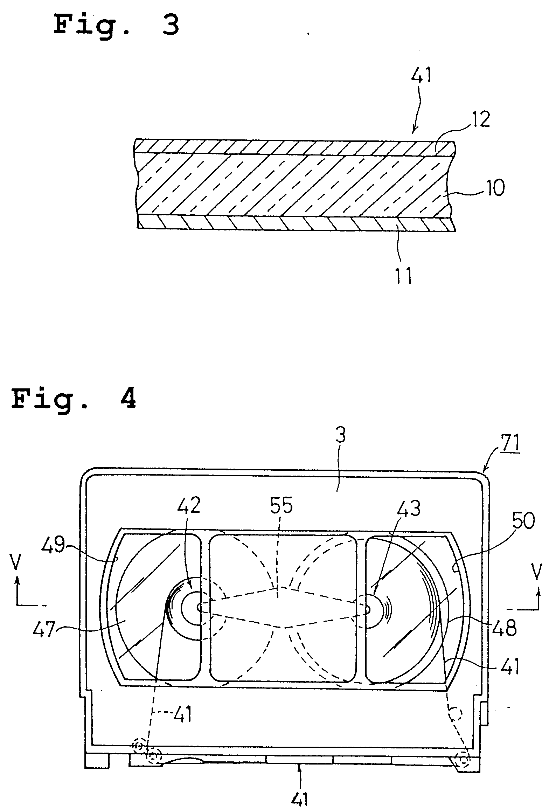

Fig. 2 illustrates another tape, in which non-magnetic colored layer 11 is divided into two layers; namely, color pigment layer 11a as the lower layer and white pigment layer 11b as the upper layer. As a result, the color of color pigment layer 11a is much emphasized by white pigment layer 11b and the influence of the color of magnetic recording layer 12 is sufficiently reduced, forming a clear color contrast to magnetic recording layer 12. In a structure as shown in Fig. 2, colored layer 11a may be omitted by coloring the support itself.

In layers 11a and 11b, the contents of pigments are 400 to 3,000 parts by weight in layer 11a and 400 to 3,000 parts by weight per 100 parts by weight of binder in layer 11b, respectively. The thickness of layer 11a is preferably 0.5 to 4.0 μm, and that of layer 11b is preferably 0.5 to 4.0 μm. Other than the above layer configuration, each layer may be combined with another pigment layer.

In the tape illustrated in Fig. 3, non-magnetic colored layer 11 is provided on support 10 oppositely to magnetic recording layer 12, not between magnetic recording layer 12 and support 10. Accordingly, it serves as a back-coating layer too.

The color of this back-coating layer 11 can be seen directly, thereby difference in color from magnetic recording layer 12 can be readily recognized.

Layer 11 can contribute to the enhancement of running property as a back-coating layer. The amount of pigments used in back-coating layer 11 is preferably 200 to 2,000 parts by weight per 100 parts by weight of binder; the thickness of the layer is preferably 0.5 to 3.0 μm.

Figs. 4 to 6 illustrate examples of video tape cassette for pirated edition prevention 71 which houses tape 41 according to the second invention of the present invention.

In video tape cassette 71, lower half 2 housing a pair of reel hubs 42 and 43 (tape reels) respectively having lower flanges 45 and 46 winding raw magnetic tape 41 containing no picture signals yet is joined with upper half 3 fixing leaf spring 55 pressing the reel hubs to hold them. In the areas where the reel hubs are pressed by leaf spring 55, small projections 52 and 53 called pivots are set at the respective centers of transparent reel flanges 47 and 48, so that leaf spring 55 is interrelated with these pivots. In these figures, 49 and 50 are a pair of transparent windows provided left and right.

To prevent the infestation of pirated editions using tape cassettes of this type, these tape cassettes are put on the market after recording prescribed information (software) according to the third invention of the present invention. These tape cassettes may also be sold as raw tape cassettes to regular traders to have them record information.

That is, a video tape cassette case which houses tape 41 containing prescribed signals can be distinguished from a pirated edition, because the tape provides different colors when viewed from the directions of 13 and 14 as described in connection with Fig. 1.

Particularly, while lid 60 of cassette 71 is open, the reverse side (i.e., support 10 side) of tape 41 can be seen from behind the cassette in a color different from that of magnetic recording layer 12, thereby the tape is readily distinguished from a pirated edition.

Next, typical examples of the tape and tape cassette according to the invention will be described in detail.

Components, ratios and procedures in the following examples may be changed within the limits not deviating from the scope of the invention. "Parts" appears hereafter means parts by weight.

A non-magnetic colored layer and a magnetic layer were formed on a 14.0-μm thick polyethylene terephthalate film support by the following procedure.
(Coating composition for non-magnetic colored layer)

```
Pigment (A) (see Table 1)                          100 parts

Pigment or dye (B) (see Table 1)                      X parts

Metal-sulfonate-containing vinyl chloride resin

    (MR-110 made by Nippon Zeon)                      7 parts

  Polyester polyurethane resin

    (XE-1 made by Takeda Chemical Ind.)               4 parts

Cyclohexanone                                        30 parts

Methyl ethyl ketone                                  20 parts

Toluene                                              20 parts
```

The above components were dispersed through kneading. Then, colored layer compositions (a) to (f) shown in Table 1 were prepared using pigments (A) and (B) shown in Table 1. (Magnetic coating composition I)

6

| | |
|---|---|
| Ferromagnetic powder Co-$\gamma$-Fe$_2$O$_3$ (1) | 100 parts |
| (Hc: 700 Oe, specific surface area: 40 m$^2$/g) | |
| $\alpha$-Al$_2$O$_3$ | 5 parts |
| Metal-sulfonate-containing vinyl chloride resin | 10 parts |
| (MR-110 made by Nippon Zeon) | |
| Polyester polyurethane resin | 5 parts |
| (XE-1 made by Takeda Chemical Ind.) | |
| Carbon black | 1 part |
| Myristic acid | 1 part |
| Stearic acid | 1 part |
| Butyl stearate | 1 part |
| Cyclohexanone | 100 parts |
| Methyl ethyl ketone | 100 parts |
| Toluene | 100 parts |

After dispersing the above magnetic coating components through kneading, 5 parts of Coronate L (product of Nippon Polyurethane Ind.) was added thereto to obtain magnetic coating composition 1.

(Magnetic coating composition II)

Magnetic coating composition II was prepared in the same manner as in magnetic coating composition I, except that a ferromagnetic powder, cobalt-modified Fe$_3$O$_4$ (2) (Hc: 700 Oe, specific surface area: 40 m$^2$/g), was used instead of ferromagnetic powder (1).

(Magnetic coating composition III)

Magnetic coating composition III was prepared in the same manner as in magnetic coating composition I, except that ferromagnetic alloy powder Fe (3) (Hc: 1,500 Oe, specific surface area: 55 m$^2$/g) was used instead of ferromagnetic powder (1).

(Magnetic coating composition IV)

Magnetic coating composition IV was prepared in the same manner as in magnetic coating composition I, except that ferromagnetic tabular hexagonal ferrite (4) (Hc: 1,000 Oe, specific surface area: 55 m$^2$/g) was used instead of ferromagnetic powder (1).

(Magnetic coating composition V)

Magnetic coating composition V was prepared in the same manner as in magnetic coating composition I, except that ferromagnetic chromium oxide (5) (Hc: 700 Oe, specific surface area: 30 m$^2$/g) was used instead of ferromagnetic powder (1).

The above coating compositions were coated on a 14.0-$\mu$m thick support by the wet-on-wet method, in layer configurations shown in Table 2. Sample tapes of 1/2 inch (or 8 mm) wide were thus obtained. In the table, "invention" means an example and "comparative" means a comparative example. Inventions 1 to 10 correspond to the layer configuration of Fig. 1, invention 11 corresponds to the layer configuration of Fig. 2. Inventions 8, 9, 17 and comparisons 3, 4, 7 were samples of 8 mm wide.

## Table 1

| Non-magnetic colored layer | Pigment (A) | Pigment or dye (B) | |
|---|---|---|---|
| | | Kind | Content (parts) |
| (a) | Titanium oxide (white) | – | 0 |
| (b) | Titanium oxide (yellow) | – | 0 |
| (c) | Chromium oxide (green) | – | 0 |
| (d) | Iron oxide red (reddish brown) | – | 0 |
| (e) | Titanium oxide (white) | Phthalocyanine type blue pigment | 5 |
| (f) | Titanium oxide (white) | Azo type red pigment | 5 |

## Table 2

| | Magnetic layer | Non-magnetic colored layer | Film thickness (μm) magnetic layer/ non-magnetic layer |
|---|---|---|---|
| Invention 1 | I | (a) | 2.0/2.0 |
| Invention 2 | I | (b) | 2.0/2.0 |
| Invention 3 | I | (c) | 2.0/2.0 |
| Invention 4 | I | (d) | 2.0/2.0 |
| Invention 5 | I | (e) | 2.0/2.0 |
| Invention 6 | I | (f) | 2.0/2.0 |
| Invention 7 | II | (e) | 2.0/2.0 |
| Invention 8 | III | (e) | 2.0/2.0 |

| Invention 9 | IV | (e) | 2.0/2.0 |
|---|---|---|---|
| Invention 10 | V | (e) | 2.0/2.0 |
| Invention 11 | I | (a)/(c)<br>Upper  Lower<br>layer  layer | 2.0/1.0/1.0<br>Upper  Lower<br>layer  layer |
| Comparative 1 | I | – | 4.0/0 |
| Comparative 2 | II | – | 4.0/0 |
| Comparative 3 | III | – | 4.0/0 |
| Comparative 4 | IV | – | 4.0/0 |
| Comparative 5 | V | – | 4.0/0 |

(Formation of back-coating layer)

The above colored layers (a), (b), (d), (e), (f) were respectively formed on the reverse sides of supports as back-coating layers (BC layers) correspondingly to the layer configuration of Fig. 3 (inventions 12 to 16 in Table 3). Colored BC layer (g) was formed on the reverse side of the support by the same procedure as in colored layer (a), except that 100 parts of carbon black was used instead of the above pigment (A) (comparative 6).

Table 3

| | Magnetic layer | Colored BC layer | Film thickness (μm)<br>magnetic layer/<br>colored BC layer |
|---|---|---|---|
| Invention 12 | I | (a) | 3.0/2.0 |
| Invention 13 | I | (b) | 3.0/2.0 |
| Invention 14 | I | (d) | 3.0/2.0 |
| Invention 15 | I | (e) | 3.0/2.0 |
| Invention 16 | I | (f) | 3.0/2.0 |
| Comparative 6 | I | (g) | 3.0/2.0 |

There was prepared a magnetic tape of double magnetic layer structure (upper magnetic layer thickness-/lower magnetic layer thickness: 0.5 μm/1.5 μm), by forming the upper magnetic layer with above magnetic coating composition III and the lower magnetic layer with the above magnetic coating composition I on non-magnetic colored layer (d) of 2.0 μm thick (Example 17).

There was prepared a magnetic tape of double magnetic layer structure (upper magnetic layer thickness-/lower magnetic layer thickness: 0.5 μm/3.5 μm) like in Example 17, except that non-magnetic colored layer (d) was not formed and that 50 parts by weight of iron red oxide was added to magnetic coating composition for lower magnetic layer I (other components of the coating composition were the same as in Example 17).

On each of the tape samples prepared as above, the color was examined from the right side and reverse side with a color analyzer (CMS-1200 made by Murakami Shikisai) to determine $L^*$, $a^*$, $b^*$, and then color difference $\Delta E^*_{ab}$ was calculated (this is prescribed in the color specification system CIELAB recommended by Commission Internationale de l'Eclairage in 1976). The results are set forth In Table 4.

Table 4A

| Sample | L* | a* | b* | ΔE | a*2+ b*2 | ΔE reverse side − ΔE right side | Δ(reverse side − right side) (a*2 + b*2) |
|---|---|---|---|---|---|---|---|
| Invention 1 right side | 19.7 | −0.4 | −2.8 | 19.9 | 8.0 | | |
| Invention 1 reverse side | 48.7 | −1.2 | −3.5 | 48.8 | 13.7 | 28.9 | 5.7 |
| Invention 2 right side | 19.8 | −0.6 | −2.7 | 20.0 | 7.7 | | |
| Invention 2 reverse side | 61.1 | −10.4 | 13.0 | 63.3 | 277.2 | 43.3 | 269.5 |

Table 4B

| Sample | L* | a* | b* | ΔE | $a^{*2} + b^{*2}$ | ΔE reverse side − ΔE right side | Δ(reverse side − right side) $(a^{*2} + b^{*2})$ |
|---|---|---|---|---|---|---|---|
| Invention 3 right side | 20.3 | −1.1 | −2.7 | 20.5 | 8.5 | | |
| Invention 3 reverse side | 30.8 | −21.4 | 8.2 | 38.4 | 525.2 | 17.9 | 516.7 |
| Invention 4 right side | 20.1 | −0.6 | −2.4 | 20.3 | 6.1 | | |
| Invention 4 reverse side | 19.6 | 13.7 | 8.5 | 25.4 | 259.9 | 5.1 | 253.8 |
| Invention 5 right side | 19.3 | −1.0 | −2.9 | 19.5 | 9.4 | | |
| Invention 5 reverse side | 49.8 | −15.0 | −31.2 | 60.7 | 1198.4 | 41.1 | 1189.0 |
| Invention 6 right side | 20.1 | −0.6 | −2.4 | 20.3 | 6.1 | | |
| Invention 6 reverse side | 43.3 | 26.2 | 2.1 | 50.7 | 690.9 | 30.4 | 684.7 |
| Invention 7 right side | 14.8 | −0.1 | −4.6 | 15.5 | 21.2 | | |
| Invention 7 reverse side | 49.8 | −15.0 | −31.2 | 60.7 | 1198.4 | 45.2 | 1177.3 |
| Invention 8 right side | 16.1 | −0.9 | −3.0 | 16.4 | 9.8 | | |
| Invention 8 reverse side | 49.8 | −15.0 | −31.2 | 60.7 | 1198.4 | 44.2 | 1188.6 |
| Invention 9 right side | 15.5 | 2.9 | −2.9 | 16.0 | 16.8 | | |
| Invention 9 reverse side | 49.8 | −15.0 | −31.2 | 60.7 | 1198.4 | 44.6 | 1181.6 |

Table 4C

| Sample | L* | a* | b* | ΔE | a*2 + b*2 | ΔE reverse side − ΔE right side | Δ(reverse side − right side) (a*2 + b*2) |
|---|---|---|---|---|---|---|---|
| Invention 10 right side | 14.6 | 0.6 | −4.0 | 15.1 | 16.4 | | |
| Invention 10 reverse side | 49.8 | −15.0 | −31.2 | 60.7 | 1198.4 | 45.5 | 1182.1 |
| Invention 11 right side | 20.1 | −0.8 | −2.8 | 20.3 | 8.5 | | |
| Invention 11 reverse side | 69.9 | −47.6 | 42.1 | 94.5 | 4038.2 | 74.2 | 4029.7 |
| Invention 12 right side | 19.8 | −0.7 | −2.7 | 20.0 | 7.8 | | |
| Invention 12 reverse side | 69.3 | −2.0 | 8.0 | 69.8 | 68.0 | 49.8 | 60.2 |
| Invention 13 right side | 19.8 | −0.7 | −2.7 | 20.0 | 7.8 | | |
| Invention 13 reverse side | 66.3 | −11.5 | 18.2 | 69.7 | 463.5 | 49.7 | 455.7 |
| Invention 14 right side | 19.8 | −0.7 | −2.7 | 20.0 | 7.8 | | |
| Invention 14 reverse side | 27.3 | 18.4 | 8.3 | 34.0 | 407.5 | 14.0 | 399.7 |
| Invention 15 right side | 19.8 | −0.7 | −2.7 | 20.0 | 7.8 | | |
| Invention 15 reverse side | 45.4 | −13.9 | −34.0 | 58.4 | 1349.2 | 38.4 | 1341.4 |
| Invention 16 right side | 19.8 | −0.7 | −2.7 | 20.0 | 7.8 | | |
| Invention 16 reverse side | 46.1 | 34.6 | 5.9 | 57.9 | 1232.0 | 37.9 | 1224.2 |

Table 4D

| Sample | L* | a* | b* | ΔE | a*2 + b*2 | ΔE reverse side – ΔE right side | Δ(reverse side – right side) (a*2 + b*2) |
|---|---|---|---|---|---|---|---|
| Invention 17 right side | 16.0 | −1.0 | −3.1 | 16.3 | 10.6 | | |
| Invention 17 reverse side | 19.6 | 13.7 | 3.5 | 25.4 | 259.9 | 9.1 | 249.3 |
| Comparative 1 right side | 19.7 | −0.4 | −2.8 | 19.9 | 8.0 | | |
| Comparative 1 reverse side | 22.4 | −0.3 | −3.2 | 22.6 | 10.3 | 2.7 | 2.3 |
| Comparative 2 right side | 14.8 | −0.1 | −4.6 | 15.5 | 21.2 | | |
| Comparative 2 reverse side | 17.1 | 0.1 | −4.6 | 17.7 | 21.2 | 2.2 | 0.0 |
| Comparative 3 right side | 16.1 | −0.9 | −3.0 | 16.4 | 9.8 | | |
| Comparative 3 reverse side | 15.6 | −0.7 | −3.5 | 16.0 | 12.7 | −0.4 | 2.9 |
| Comparative 4 right side | 15.5 | 2.9 | −2.9 | 16.0 | 16.8 | | |
| Comparative 4 reverse side | 13.6 | 3.9 | −2.1 | 14.3 | 19.6 | −1.7 | 2.8 |
| Comparative 5 right side | 14.6 | 0.6 | −4.0 | 15.1 | 16.4 | | |
| Comparative 5 reverse side | 13.9 | 1.1 | −3.3 | 14.3 | 12.1 | −0.8 | −4.3 |
| Comparative 6 right side | 19.8 | −0.7 | −2.7 | 20.0 | 7.8 | | |
| Comparative 6 reverse side | 24.3 | 0.0 | −0.7 | 24.3 | 0.5 | 4.3 | −7.3 |

Table 4E

| Sample | L* | a* | b* | ΔE | a*2 + b*2 | ΔE reverse side − ΔE right side | Δ (reverse side − right side) (a*2 + b*2) |
|---|---|---|---|---|---|---|---|
| Comparative 7 right side | 16.1 | −1.1 | −2.9 | 16.4 | 9.6 | | |
| Comparative 7 reverse side | 19.7 | 3.4 | 1.5 | 20.0 | 13.8 | 3.7 | 4.2 |

Electromagnetic conversion properties were evaluated in the following manner using video cassettes each housing a sample tape. The results are shown in Table 5.

(a) RF output, Lumi S/N, Chroma AM-S/N, Chroma output:

Evaluation was carried out using a color noise meter "Shibasoku 925 D/1" by playing-back sample tapes on a deck HR-S 7000 (product of Japan Victor). The results are shown in values (dB) relative to those of a reference tape. On the other hand, inventions 8, 9, 17 and comparatives 3, 4, 5 were evaluated with Camcorder V900 (product of Sony Corp.) because of being 8-mm wide samples. The frequency of each signal was as follows:

RF output        : 6 MHz (7 MHz for 8-mm wide tapes)
Lumi S/N         : 6 MHz (7 MHz for 8-mm wide tapes)
Chroma AM-S/N  : 629 KHz (750 KHz for 8-mm wide tapes)
Chroma output    : 629 KHz (750 KHz for 8-mm wide tapes)

14

Table 5

| | RF output (dB) | Lumi S/N (dB) | Chroma output (dB) | Chroma AM-S/N (dB) |
|---|---|---|---|---|
| Invention 1 | 0.1 | 0.1 | 0.1 | 0 |
| Invention 2 | -0.1 | 0 | 0 | -0.1 |
| Invention 3 | 0 | 0.1 | 0 | 0.1 |
| Invention 4 | 0.1 | 0 | 0.1 | 0 |
| Invention 5 | 0.1 | 0.2 | 0.1 | 0.1 |
| Invention 6 | 0.2 | 0.1 | 0.1 | 0.1 |
| Invention 7 | 0.4 | 0.5 | 0.3 | 0.4 |
| Invention 8 | 0 | -0.1 | 0 | 0 |
| Invention 9 | 0.2 | 0.2 | 0.1 | 0.2 |
| Invention 10 | 0.1 | 0.1 | 0 | 0 |
| Invention 11 | 0.1 | 0 | 0.1 | 0 |
| Invention 12 | 0 | 0 | 0 | 0 |
| Invention 13 | 0 | -0.1 | 0 | -0.1 |
| Invention 14 | 0 | -0.1 | 0 | 0 |
| Invention 15 | 0.1 | 0.1 | 0.1 | 0.1 |
| Invention 16 | 0.1 | 0 | 0.1 | 0 |
| Invention 17 | 0 | 0 | 1.1 | 0.9 |
| Comparative 1 | 0 | 0 | 0 | 0 |
| Comparative 2 | 0.5 | 0.6 | 0.3 | 0.4 |
| Comparative 3 | 0 | 0 | 0 | 0 |
| Comparative 4 | 0.2 | 0.3 | 0.2 | 0.2 |
| Comparative 5 | 0.1 | 0.2 | 0.1 | 0 |
| Comparative 6 | 0 | -0.1 | 0 | -0.1 |
| Comparative 7 | -0.3 | -0.4 | -0.3 | -0.4 |

As stated above, forming tapes and tape cassettes according to the invention provides articles easy to distinguish from pirated editions because of different in color between the non-magnetic colored layer and magnetic recording layer; moreover, the articles of the invention are difficult to imitate.

The color difference $\Delta$Eab shown in Table 4 is an important matter in embodying the invention, and it is preferable that the color difference between the right side of a tape and the reverse side thereof {$\Delta E^*_{ab}$ (reverse side) - $\Delta E^*_{ab}$ (right side)) be 5.0 or more and especially 10.0 to 100.0. Instead of or coexisting with the above condition, it is also preferable that {reverse side ($A^{*2} + b^{*2}$) - right side ($a^{*2} + b^{*2}$)} be 5.0 or more. Coexistence

15

of the above two conditions is particularly preferable.

It can be seen from Table 5 that the tape and tape cassette according to the invention have good electromagnetic conversion properties.

The other Examples are shown.

<Coating liquid a non-magnetic colored layer>

```
Titanium oxide                                    100 parts

Phthalocyanine-based blue pigment                   3 parts

Vinyl chloride resin-containing metal sulfonate

(MR-110 manufactured by Nippon Zeon Co., Ltd.)      6 parts

Polyesterpolyurethane resin


(XE-1 manufactured by Takeda Chemical

Industries, Ltd.)                                   3 parts

Cyclohexanone                                      30 parts

Methylethylketone                                  20 parts

Toluene                                            20 parts
```

The above ingredients are kneaded and dispersed.

<Coating liquid A for magnetic recording layer>

Ferromagnetic powder Co-$\gamma$-Fe$_2$O$_3$

(Hc: 700 Oe, Specific surface area: 40 m$^2$/g)    100 parts

$\alpha$-Al$_2$O$_3$                                    5 parts

Vinyl chloride-based resin containing metal sulfonate

(MR-110 manufactured by Nippon Zeon Co., Ltd.)   10 parts

Polyesterpolyurethane resin

(XE-1 manufactured by Takeda Chemical

Industries, Ltd.)                          5 parts

Carbon black                               1 part

Mrystic acid                               1 part

Stearic acid                               1 part

Butyl stearate                             1 part

Cyclohexanone                            100 parts

Methylethylketone                        100 parts

Toluene                                  100 parts

The above ingredients are kneaded and dispersed, followed by addition of 5 parts of Colonate manufactured by Nippon Polyurethane Industry Co., Ltd.

The above coating liquids were applied onto a 14 $\mu$m-thick polyethylene terephthalate film support by the wet-on-wet method to prepare a 1/2 inch-wide magnetic tape sample.

Tape samples were prepared in substantially the same manner as mentioned above except that the thickness of and the coating liquid for the magnetic recording layer were varied as shown in Table 6.

Table 6

| | Magnetic recording layer | | Non-magnetic colored layer | |
|---|---|---|---|---|
| | Kind | Layer thickness ($\mu$m) | Kind | Layer thickness ($\mu$m) |
| Example 1 | A | 2.2 | a | 2.0 |
| Example 2 | A | 2.2 | a | 2.0 |
| Example 3 | A | 2.2 | a | 2.0 |
| Example 4 | A | 2.2 | a | 2.0 |
| Example 5 | B | 2.2 | a | 2.0 |
| Example 6 | A | 2.2 | a | 2.0 |
| Example 7 | A | 2.2 | a | 2.0 |
| Example 8 | A | 2.2 | a | 2.0 |
| Comparative example 1 | A | 4.0 | – | – |
| Comparative example 2 | B | 4.0 | – | – |
| Comparative example 3 | A | 2.2 | a | 2.0 |
| Comparative example 4 | A | 2.2 | a | 2.0 |
| Comparative example 5 | A | 2.2 | a | 2.0 |
| Comparative example 6 | B | 2.2 | a | 2.0 |
| Comparative example 7 | A | 2.2 | a | 2.0 |

<Coating liquid B for magnetic recording layer>

Prepared in substantially the same manner as in Coating liquid A, except that Fe (Hc: 1500 Oe, Specific surface area 55 m²/g) was used as the ferromagnetic powder.

For each sample, the roughness of the opposite side of the support (where no magnetic layer was provided) was examined by using a Talystep roughness meter (manufactured by Taylor and Hobson Co., Ltd.) to obtain a roughness curve. From this curve, projections higher than the peak count value were found. For these projections, distance from the reference line (height) was measured. The average projection height, the number of projections of a height exceeding 0.01 $\mu$m, the number of projections of a height exceeding 0.30 $\mu$m and the maximum projection height were examined under the following conditions:

Measured length: 1 mm (the surface of the support was traced with a measurement needle by a length of 1 mm)

Cut-off: 0.33 Hz
(bypass filter)
Peak count: 0.005 μm

For the number of projections of a height exceeding 0.30 μm, the above measurement was repeated 400 times since the frequency was too low.

Table 7

| | Number of projections | | Height of projection | | |
|---|---|---|---|---|---|
| | 0.01 μm or more | 0.3 μm or more | Average projection height, μm (A) | Maximum projection height, μm (B) | A/B |
| Example 1 | 320 | 0 | 0.092 | 0.220 | 2.4 |
| Example 2 | 350 | 60 | 0.150 | 0.330 | 2.2 |
| Example 3 | 430 | 800 | 0.190 | 0.350 | 5.7 |
| Example 4 | 70 | 0 | 0.050 | 0.200 | 4.0 |
| Example 5 | 320 | 0 | 0.092 | 0.220 | 2.4 |
| Example 6 | 50 | 0 | 0.030 | 0.200 | 6.7 |
| Example 7 | 480 | 1000 | 0.180 | 0.400 | 2.2 |
| Example 8 | 100 | 0 | 0.020 | 0.190 | 9.5 |
| Comparative Example 1 | 40 | 0 | 0.040 | 0.200 | 5.0 |
| Comparative Example 2 | 40 | 0 | 0.040 | 0.200 | 5.0 |
| Comparative Example 3 | 40 | 0 | 0.040 | 0.200 | 5.0 |
| Comparative Example 4 | 700 | 1500 | 0.230 | 0.400 | 1.7 |
| Comparative Example 5 | 230 | 70 | 0.030 | 0.400 | 13.3 |
| Comparative Example 6 | 40 | 0 | 0.040 | 0.200 | 5.0 |
| Comparative Example 7 | 30 | 0 | 0.008 | 0.150 | 18.8 |

In the table, A/B means the ratio of the average projection height to the maximum projection height.

For each tape, the color of the right side of the tape and that of the opposite side of the tape were examined by means of a color analyzer (CMS-1200 manufactured by Murakami Shikisaisha) to obtain $L^*$, $a^*$ and $b^*$. Then, color difference $\Delta E^*_{ab}$ was calculated (see the color specification CIELAB recommended in 1976 by Commission Internationale de l'Eclairage). The results obtained are shown in Table 8.

Table 8

| Sample | L* | a* | b* | $\Delta E$ | $a^{*2}+b^{*2}$ | $\Delta E$(opposite side)- $\Delta E$(right side) | $\Delta$(opposite side - right side) $(a^{*2}+b^{*2})$ |
|---|---|---|---|---|---|---|---|
| Example 1 right side | 19.3 | -1.0 | -2.9 | 19.5 | 9.4 | - | - |
| Example 1 opposite side | 49.8 | -15.0 | -31.2 | 60.7 | 1198.4 | 41.1 | 1189.0 |
| Example 2 right side | 19.3 | -1.0 | -2.9 | 19.5 | 9.4 | - | - |
| Example 2 opposite side | 49.8 | -15.0 | -31.2 | 60.7 | 1198.4 | 41.1 | 1189.0 |
| Example 3 right side | 19.3 | -1.0 | -2.9 | 19.5 | 9.4 | - | - |
| Example 3 opposite side | 49.8 | -15.0 | -31.2 | 60.7 | 1198.4 | 41.1 | 1189.0 |
| Example 4 right side | 19.3 | -1.0 | -2.9 | 19.5 | 9.4 | - | - |
| Example 4 opposite side | 49.8 | -15.0 | -31.2 | 60.7 | 1198.4 | 41.1 | 1189.0 |
| Example 5 right side | 16.1 | -1.0 | -3.0 | 16.4 | 9.8 | - | - |

| Sample | L* | a* | b* | $\Delta E$ | $a^{*2}+b^{*2}$ | $\Delta E$(opposite side)- $\Delta E$(right side) | $\Delta$(opposite side - right side) $(a^{*2}+b^{*2})$ |
|---|---|---|---|---|---|---|---|

| | | | | | | | |
|---|---|---|---|---|---|---|---|
| Example 5 opposite side | 49.8 | -15.0 | -31.2 | 60.7 | 1198.4 | 44.2 | 1188.6 |
| Example 6 right side | 19.3 | -1.0 | -2.9 | 19.5 | 9.4 | – | – |
| Example 6 opposite side | 49.8 | -15.0 | -31.2 | 60.7 | 1198.4 | 41.1 | 1189.0 |
| Example 7 right side | 19.3 | -1.0 | -2.9 | 19.5 | 9.4 | – | – |
| Example 7 opposite side | 49.8 | -15.0 | -31.2 | 60.7 | 1198.4 | 41.1 | 1189.0 |
| Example 8 right side | 19.3 | -1.0 | -2.9 | 19.5 | 9.4 | – | – |
| Example 8 opposite side | 49.8 | -15.0 | -31.2 | 60.7 | 1198.4 | 41.1 | 1189.0 |
| Comparative Example 1 right side | 19.7 | -0.4 | -2.8 | 19.9 | 8.0 | – | – |
| Comparative Example 1 opposite side | 22.4 | -0.3 | -3.2 | 22.6 | 10.3 | 2.7 | 2.3 |
| Comparative Example 2 right side | 16.1 | -0.9 | -0.3 | 16.4 | 9.8 | – | – |
| Comparative Example 2 right side | 15.6 | -0.7 | -35 | 16.0 | 12.7 | -0.4 | 2.9 |
| Comparative Example 3 right side | 19.3 | -1.0 | -2.9 | 19.5 | 9.4 | – | – |
| Comparative Example 3 opposite side | 49.8 | -15.0 | -31.2 | 60.7 | 1198.4 | 41.1 | 1189.0 |
| Comparative Example 4 right side | 19.3 | -1.0 | -2.9 | 19.5 | 9.4 | – | – |
| Comparative Example 4 opposite side | 49.8 | -15.0 | -31.2 | 60.7 | 1198.4 | 41.1 | 1189.0 |
| Comparative Example 5 right side | 19.3 | -1.0 | -2.9 | 19.5 | 9.4 | – | – |
| Comparative Example 5 opposite side | 49.8 | -15.0 | -31.2 | 60.7 | 1198.4 | 41.1 | 1189.0 |
| Comparative Example 6 right side | 16.1 | -0.9 | -3.0 | 16.4 | 9.8 | – | – |
| Comparative Example 6 opposite side | 49.8 | -15.0 | -31.2 | 60.7 | 1198.4 | 41.1 | 1189.0 |
| Comparative Example 7 right side | 19.3 | -1.0 | -2.9 | 19.5 | 9.4 | – | – |
| Comparative Example 7 opposite side | 49.8 | -15.0 | -31.2 | 60.7 | 1198.4 | 41.1 | 1189.0 |

Each tape was housed in a cartridge to obtain videocassette. Each of the so-obtained videocassette was evaluated for electromagnetic conversion characteristics, running durability and scratches on the opposite side of the support.

(a) Electromagnetic conversion characteristics

RF output, Lumi S/N, Chroma AM-SN, Chroma output:
Measured with a video deck HR-S7000 (manufactured by Japan Victor Co.) and a color video noise meter Shibasoku 925 D/1 (manufactured by Shibasoku), and indicated as the value relative to that of a reference tape.
The frequency of each signal was as follows:
RF output        6 MHz
Lumi S/N        6 MHz
Chroma AM-S/N 629 KHz
Chroma output   629 KHz

21

(b) Running durability

At 20°C and 60%RH, information was recorded on a 120 min-videotape for 2 hours using a video deck HR-S6000 (manufactured by Japan Victor, Co., Ltd.) Then, rewinding and playback were repeated 1,000 times to examine whether troubles occurred during the running of the tape.

A  =Excellent

B  =Fair

C  =Tape edge was partly folded

D  =Tape edge was folded or tape stopped running

(c) Scratches on the opposite side of the support

Each sample tape was allowed to run from beginning to end 400 times, and the opposite side of the support was visually checked after running.

:   No scratches were observed

:   Slight scratches, but not problematic

:   A lot of scratches, but the quality of reproduced image was good

:   A lot of scratches, and the quality of reproduced image was poor

Table 9

| | RF output | Lumi S/N | Chroma output | Chroma AM | Running durability | Scratches on the opposite side of the support |
|---|---|---|---|---|---|---|
| Example 1 | 1.1 | 1.2 | 0 | 1.3 | A | A |
| Example 2 | 0.9 | 1.0 | 0 | 1.0 | A | A |
| Example 3 | 0.8 | 0.7 | 0 | 0.8 | A | A |
| Example 4 | 1.4 | 1.5 | 0 | 1.5 | B | B |
| Example 5 | 0.1 | 0 | 0 | 0.1 | A | A |
| Example 6 | 1.5 | 1.6 | 0 | 1.4 | B | B |
| Example 7 | 0.7 | 0.7 | 0 | 0.7 | A | B |
| Example 8 | 1.6 | 1.7 | 0 | 1.4 | B | B |
| Comparative Example 1 | 1.0 | 1.0 | 0 | 1.0 | D | D |
| Comparative Example 2 | 0 | 0 | 0 | 0 | D | D |
| Comparative Example 3 | 1.0 | 1.0 | 0 | 1.0 | D | D |
| Comparative Example 4 | 0 | 0 | 0 | 0 | B | D |
| Comparative Example 5 | 0 | 0 | −0.1 | −0.3 | C | B |
| Comparative Example 6 | 0 | 0 | 0 | 0 | D | D |
| Comparative Example 7 | 1.7 | 1.8 | 0 | 1.5 | D | D |

As is evident from the above results, the tapes of the invention are distinguished from other tapes by difference in color between the non-magnetic colored layer and the magnetic recording layer.

In the invention, better results can be obtained when $\Delta E^*_{ab}$ opposite side- $\Delta E^*_{ab}$ right side is 5 or more, in particular, within the range of 10.0 to 100.0. It is also preferred that $(a^{*2}+b^{*2})$ opposite side-$(a^{*2}+b^{*2})$ right side be 5 or more. Best results can be obtained when a magnetic tape satisfies both of these two requirements.

The results shown in Table 4 demonstrate that the magnetic tapes of the invention are excellent both in electromagnetic conversion characteristics and running durability.

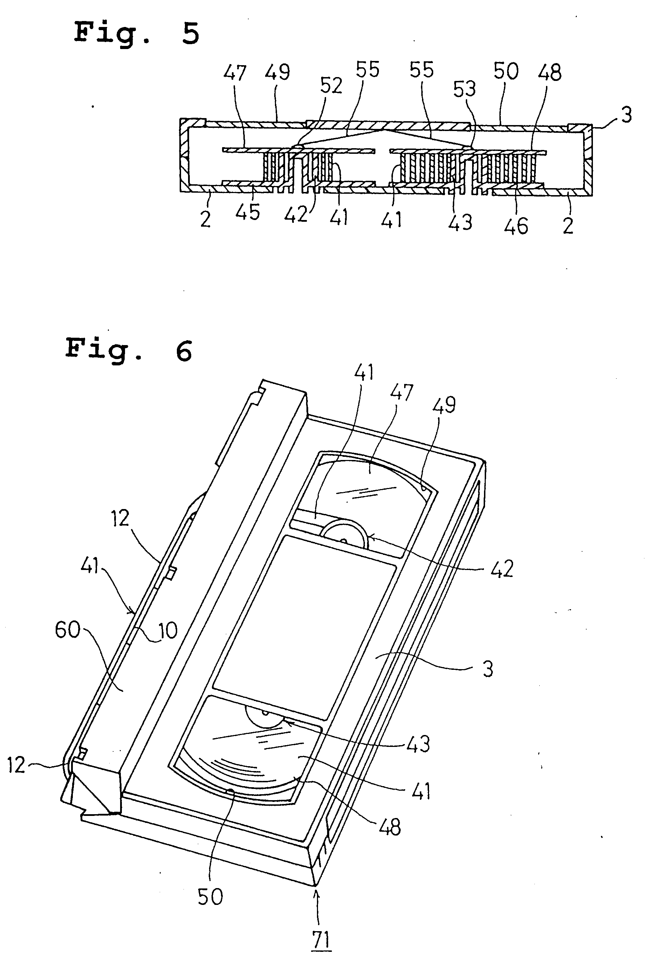

Fig. 4 or 5 each indicate a videocassette 71 according to the secondary aspect of the invention.

The cassette consists of a lower half 2 and an upper half 3 that are joined to form an integral body. The lower half accommodates a pair of (left and right) reel hubs on which an unrecorded raw magnetic tape of the invention 41 is wound. Each hub is provided with a lower flange (45, 46) and an upper transparent flange (47, 48). A leaf spring 55 for retaining these hubs is fixed to the upper half. At the center of each transparent flange, there is provided a small projection called a pivot (52, 53). The reel hubs are retained by the leaf spring by the engagement of the leaf spring with each of these projections. In this figure, numerals 49 and 50 indicate a pair of transparent windows.

According to the third aspect of the invention, software is recorded on the magnetic tape 41 in this cassette. Due to the aforementioned specific feature, the magnetic tape 41 can be readily distinguished from other tapes, on which the same software is illegally recorded.

As shown in Fig. 6, when the lid 60 of the cassette 71 is opened, the colored pattern formed on the side opposite to the magnetic recording layer can be recognized from the direction 14. A marked difference in color between the pattern and the magnetic recording layer allows the recognition of the pattern to be performed extremely easily.

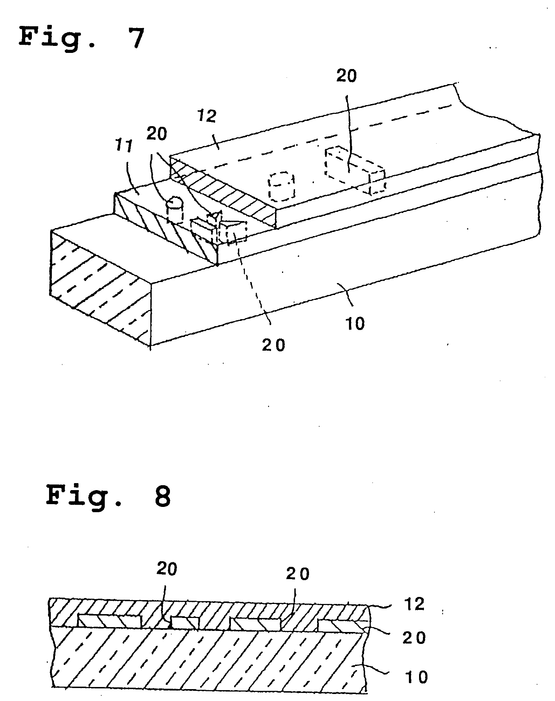

Figs. 7 to 28 each show a magnetic tape according to another aspect of the present invention.

The tape 41 shown in Figs. 7 and 8 is prepared by superimposing on one side of a transparent support 10 (a base film) a non-magnetic colored layer 11 and a magnetic recording layer 12 in this sequence.

Examples of ferromagnetic powder contained in the magnetic recording layer 12 include magnetic oxides such as $\gamma$-Fe$_2$O$_3$, Co-containing $\gamma$-Fe$_2$O$_3$, Co-coated $\gamma$-Fe$_2$O$_3$, Fe$_3$O$_4$, Co-containing Fe$_3$O$_4$, Co-coated Fe$_3$O$_4$, Co-containing magnetic FeOx (3/2>x>4/3) and CrO$_2$; iron nitride; hexagonal systems of ferrite such as barium ferrite.

And magnetic metal powder composed mainly of Fe, Ni and Co, such as Fe, Ni, Co, Fe-Al alloys, Fe-Al-Ca alloys, Fe-Al-Ni alloys, Fe-Al-Zn alloys, Fe-Al-Co alloys, Fe-Ni alloys, Fe-Ni-Co alloys, Fe-Ni-Si-Al-Mn alloys, Fe-Ni-Si-Al-Zn alloys, Fe-Al-Si alloys, Fe-Ni-Zn alloys, Fe-Ni-Mn alloys, Fe-Ni-Si alloys, Fe-Mn-Zn alloys, Fe-Co-Ni-P alloys and Co-Ni alloys. The magnetic metal powder may contain an element such as Cu and Cr or its compound as an additive.

The magnetic recording layer 12 may contain a lubricant (e.g. silicone oil, graphite, molybdenum disulfide, tungsten disulfide, a monobasic fatty acid with 12 to 20 carbon atoms such as stearic acid, an ester of a fatty acid with 13 to 40 carbon atoms), an abrasive (e.g. $\alpha$-Al$_2$O$_3$), an anti-static agent (e.g. carbon black, graphite) and a dispersant (e.g. lecithin powder).

Preferred binders to be employed in the magnetic recording layer and the non-magnetic colored layer are those with an average molecular weight of 10,000 to 200,000, examples of which including vinyl chloride-vinyl acetate copolymers, vinyl chloride-vinylidene chloride copolymers, vinyl chloride-acrylonitrile copolymers, polyvinyl chloride, urethane resins, butadiene-acrylonitrile copolymers, polyamide resins, polyvinyl butyral, cellulose derivatives (e.g. cellulose acetate butyrate, cellulose diacetate, cellulose triacetate, cellulose propionate, nitrocellulose), styrene-butadiene copolymers, polyester resins, synthetic rubber, phenol resins, epoxy resins, urea resins, melamine resins, phenoxy resins, silicon resins, acrylic reactive resins, high molecular weight polyester resin/isocyanate prepolymer mixtures, polyester polyol/polyisocyante mixtures, urea-formaldehyde resins, low molecular weight glycol/high molecular weight diol/isocynate mixtures, and mixtures thereof.

For improved dispersibility of magnetic powder, it is preferred that the binder contain at least one polar group selected from -SO$_3$M, -OSO$_3$M, -COOM and -PO(OM')$_2$ (wherein M is hydrogen or an alkali metal such as Na, K and Li; and M' is hydrogen, an alkali metal such as Na, K and Li or alkyl).

The non-magnetic colored layer 11 contains, besides the above-mentioned binder, a white pigment such as alumina and titanium oxide, a green pigment such as chromium oxide, a yellow pigment such as chrome yellow or a red pigment such as Indian red. These pigments preferably have particle sizes of O.1 to 10 $\mu$m, still preferably 0.1, to 2 $\mu$m.

Instead of or in combination with the above pigment, the non-magnetic colored layer 11 may contain a dye. Examples of suitable dyes include phthalocyanine dyes, azo dyes, anthraquinone dyes, indigoid dyes, nitro or nitroso dyes, quinoline dyes, methane dyes, thiazole dyes, quinoneimine dyes, azine dyes, oxazine dyes, thiazine dyes, azoic dyes, diphenylmethane dyes, triphenylmethane dyes, xanthene dyes, acrylidine dyes, oxide dyes, sulfide dyes, phthalein dyes, aminoketone dyes and oxyketone dyes.

In the non-magnetic colored layer 11, the above pigment or dye is contained preferably in an amount of 100 to 10,000 parts by weight, still preferably 300 to 3000 parts by weight, per 100 parts by weight of the binder.

The thickens of the non-magnetic colored layer 11 is preferably 0.1 to 10 $\mu$m, still preferably 0.5 to 6 $\mu$m.

The non-magnetic colored layer 11 is colored in a color different from that of the magnetic recording layer 12. The application of a coating liquid for this layer is performed in such a manner that voids 20 (parts where no coating liquid was applied) will be formed. These voids constitute a prescribed pattern, such as a letter or a figure. Such patterned layer 11 can be prepared by the gravure coating method. The magnetic recording layer 12 is formed on this layer 11 by the extrusion coating method. Better results can be obtained when the formation of the magnetic layer 12 is performed after the non-magnetic colored layer 11 is dried.

The surface of the non-magnetic colored layer 11 is uneven due to the formation of a pattern thereon. The viscosity of a coating liquid for forming this layer and calendering conditions must be carefully controlled to prevent such unevenness from adversely affecting the surface properties of the magnetic recording layer 12.

The non-magnetic support 10 is transparent. Examples of such support include polyesters such as polyethylene terephthalate and polyethylene-2.6-naphthalate, polyolefines such as polypropylene, cellulose derivatives such as cellulose triacetate and cellulose diacetate, and plastics such as polyamide and polycarbonate. Also usable are metals such as Cu, Al and Zn and ceramics such as glass, boron nitride and Si carbide.

The thickness of the support is preferably 3 to 100 $\mu$m, still preferably 5 to 50 $\mu$m.

The provision of the non-magnetic colored layer 11 and the magnetic recording layer 12 on the support 10 can be performed by either the wet-on-dry method or the wet-on-wet method. In the former method, coating and drying are repeated for each layer, and in the latter method, on a layer which is still wet, other layers are provided simultaneously or in sequence.

In the invention, for strong adhesion between the layers as well as for improved surface properties of the tape, the wet-on-wet method is preferable. It is preferable to add an isocyanate-based hardener to a magnetic coating liquid, and in some cases, to a coating liquid for forming the non-magnetic colored layer 11.

One example of preparing the magnetic tape 41 will be given below. On a 14.0 $\mu$m-thick polyethylene terephthalate base film, coating liquids of the following compositions are applied:

<Coating liquid (I) for non-magnetic colored layer>

```
Titanium oxide (white)                              100 parts


Phthalocyanine-based blue pigment                     5 parts

Vinyl chloride resin containing metal sulfonate

(MR-110 manufactured by Nippon Zeon Co., Ltd.)        7 parts

Polyesterpolyurethane resin

(XE-1 manufactured by Takeda Chemical

Industries, Ltd.)                                     4 parts

Cyclohexanone                                        30 parts

Methylethylketone                                    20 parts

Toluene                                              20 parts
```

The above ingredients are kneaded and dispersed.

<Coating liquid for magnetic recording layer>

```
Ferromagnetic powder Co-γ-Fe₂O₃ (1)

(Hc:700 Oe, Specific surface area: 40 m²/g)      100 parts

  -Al₂O₃                                          5 parts

Vinyl chloride-based resin containing metal sulfonate

(MR-110 manufactured by Nippon Zeon Co., Ltd.)   10 parts

Polyesterpolyurethane resin

(XE-1 manufactured by Takeda Chemical

Industries, Ltd.)                                5 part

Carbon black                                     1 part

Mrystic acid                                     1 part

Stearic acid                                     1 part

Butyl stearate                                   1 part

Cyclohexanone                                    100 parts

Methylethylketone                                100 parts

  Toluene                                        100 parts
```

The above ingredients are kneaded and dispersed, followed by addition of 5 parts of Colonate manufactured by Nippon Polyurethane Industry Co., Ltd.

The coating liquid for the non-magnetic colored layer is applied onto the 14.0 μm-thick polyethylene terephthalate support by the gravure coating method (using a roll coater on which a prescribed pattern is engraved), and dried to a dry thickness of 2.0 μm. On the so-formed non-magnetic colored layer, the coating liquid for the magnetic recording layer is applied by means of an extrusion coater, followed by drying and calendering, thereby to obtain a 2.0 μm-thick magnetic recording layer. The resultant is cut into a tape with a width of 1/2 inch or 8 mm.

As viewed from the side of the magnetic recording layer 12 (direction 13 in Fig. 8), the color of the magnetic recording layer 12 (normally dark brown) can be recognized. In the eyes of people who observe this tape from the side opposite to the magnetic recording layer 12 (direction 14 in Fig. 8), it seems as if the non-magnetic colored layer 11 has spots of dark brown (the color of the magnetic layer), since the magnetic recording layer peeps through the voids 20. These dark brown spots are recognized as a pattern.

If the non-magnetic colored layer 11 contains a white pigment together with a color pigment, the color of the nonmagnetic colored layer 11 can stand out more vividly from that of the magnetic recording layer 12 as viewed from the direction 14, since the white pigment makes the color of the magnetic layer (normally dark brown) less recognizable. In this case, the non-magnetic colored layer 11 has a pastel color due to the mixture of a white pigment and a color pigment.

The pattern formed in the non-magnetic colored layer serves to make the tape of the invention distinguished from other conventional tapes. No pattern can be recognized in ordinary magnetic tapes as seen from the direction 14, since they have no such non-magnetic colored layer. Accordingly, if software prerecorded on the magnetic tape shown in Fig. 7 or 8 is duplicated on an ordinary tape, such tape can be readily recognized as an illegal copy.

As is understood from the above, in the invention, a copy-protection means is incorporated in a magnetic tape itself, not in a cartridge housing the tape. Therefore, bootleg manufacturers who try to make a copy of software prerecorded on the tape of the invention have to, at first, prepare a magnetic tape similar to that of the invention.

However, it is extremely difficult to prepare a close imitation of the magnetic tape of the invention by simply working on an ordinary raw magnetic tape. Another advantage of the magnetic tape of the invention is that, due to the free choice of the kind of pigment used in the non-magnetic colored layer, tape manufacturers can prepare the pattern of the non-magnetic colored layer in a desired color.

Still another advantage of the magnetic tape of the invention is that it can be prepared at a low cost. The formation of a prescribed pattern in the non-magnetic colored layer does not lead to an increased production cost.

The magnetic tape of the invention eliminates the need of adding a specific signal to the output for copy-protection purposes. Therefore, there is no need to employ an expensive device for the addition,of such signal. Further, the magnetic tape of the invention is free of fear of image quality deterioration caused by such anti-copying signal.

Unlike conventional magnetic tapes in which a magnetic recording layer itself contains a pigment or a dye, the magnetic tape shown in Fig. 7 or 8, due to the provision of the non-magnetic colored layer 11 separately from the magnetic recording layer 12, has such advantages that a clear distinction can be made between the color of the non-magnetic colored layer and that of the magnetic recording layer, and that there is no fear of deterioration of electromagnetic conversion characteristics of the magnetic recording layer due to the presence of a pigment. In addition, since the non-magnetic colored layer is present between the magnetic layer and the support, it never comes off during the running of the tape. Further, the non-magnetic colored layer can serve to improve adhesion between the support and the magnetic recording layer.

In the case of the magnetic tapes shown in Fig. 7 or 8, the voids 20 are so arranged to constitute a prescribed pattern. In the invention, alternatively, the projected portions of the non-magnetic colored layer may constitute a pattern. In this case, the pattern has the color of the non-magnetic colored layer, and the voids 20 constitutes a reverse pattern.

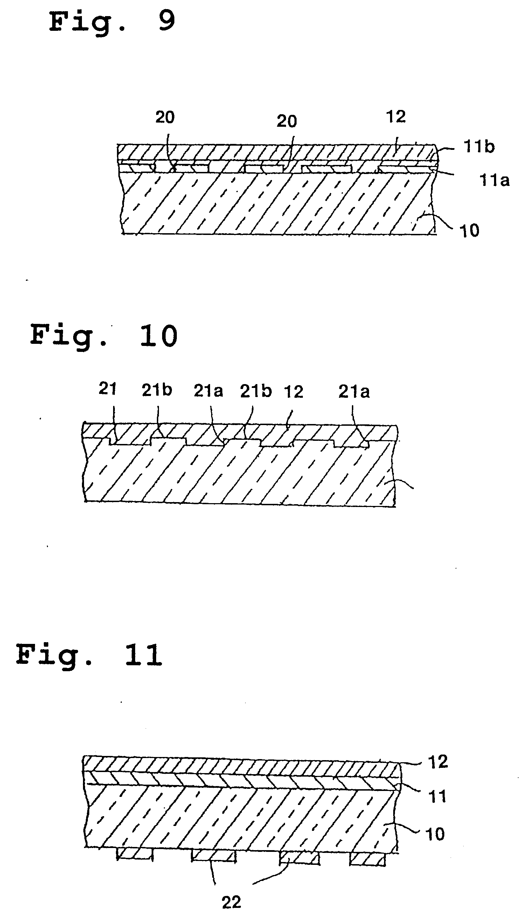

Fig. 9 shows a magnetic tape according to another embodiment of the invention.

In this tape, the non-magnetic colored layer 11 consists of the upper layer 11b and the lower layer 11a. The lower layer is a pigment-containing layer in which a prescribed pattern is engraved. The upper layer is a layer that contains a pigment of a color different from that in the lower layer (e.g. white pigment). The pigment present in the upper layer allows the color of the lower layer (e.g. blue) to be more striking, allowing the pattern formed in the lower layer to be more recognizable. In this arrangement, the color of the magnetic recording layer 12 can be prevented from affecting the color of the non-magnetic colored layer, thus enabling the color of the non-magnetic colored layer to make a vivid contrast with the color of the magnetic layer. Further, due to the presence of the upper layer, the surface properties of this tape will never be affected adversely by the unevenness of the lower layer.

The amount of the pigment contained in the lower layer 11a is preferably 400 to 3,000 parts by weight, and that in the upper layer 11b is also preferably 400 to 3,000 parts by weight, per 100 parts by weight of a binder. The thickness of the lower layer 11a is preferably 0.5 to 4.0 $\mu$m, and the same is true of the upper layer 11b. Other pigment-containing layers may be provided in combination with these layers.

It is also possible to prepare a magnetic tape by a method comprising: mixing, but not completely, a solution of a pigment of a color different from that of a pigment contained in the coating liquid for the non-magnetic colored layer with the coating liquid for the non-magnetic colored layer; applying the resulting inhomogeneous mixture onto a transparent support to prepare a non-magnetic colored layer thereon; and applying the coating liquid for the magnetic recording layer on the so-formed non-magnetic colored layer. The non-magnetic colored layer of this tape is patterned with dots or small circles. In this case, titanium oxide and Indian red may be the two different pigments.

Fig. 10 shows a magnetic tape prepared by a method in which the upper surface of a non-magnetic support 10 is embossed to provide voids 21a and projections 21b thereon, and a magnetic recording layer 12 is formed on this support.

In this tape, a prescribed pattern, which is constituted by these voids and projections, is rendered visible due to difference in the amount of reflected light from the magnetic recording layer between the voids and the projections. As in the case of the tapes shown in Figs 10, the embossed pattern is useful to make this tape distinguished from other tapes. This magnetic tape is different from that in Figs. 10 in that the anti-copying pattern can be prepared relatively readily by simply embossing a support.

The magnetic tape shown in Fig. 11 is prepared by a method comprising: providing on one side of a support 10 a non-magnetic colored layer 11 having an even surface (i.e., not patterned); providing a magnetic recording layer 12 thereon; and forming a prescribed pattern 22 of a color different from that of the non-magnetic colored layer 11 on the other side of the support by the gravure coating method. For example, the non-magnetic colored layer 11 may be of light blue, and the pattern may be of reddish brown. The amount of a pigment contained in the pattern 22 is preferably 200 to 2,000 parts by weight per 100 parts by weight of a binder. The pattern 22 is preferably 0.5 to 3.0 μm in thickness.

In this arrangement, the recognition of the color of the pattern is hardly hindered by the color of the magnetic recording layer. As seen from the opposite side of the support, it can be observed that the light blue of the non-magnetic colored layer 11 is spotted with the reddish brown of the pattern 22.

In the magnetic tape shown in Fig. 11, there is no specific restriction as to the combination of the color of the pattern 22 and that of the non-magnetic colored layer 11. Some colors of the pattern 22 can eliminate the need to provide a non-magnetic colored layer. In the case of a tape having no non-magnetic colored layer, it can be observed from the opposite side of the support that the pattern 22 stands out clearly against the dark-brown magnetic recording layer.

The pattern 22 may also be prepared by vacuum spraying or spatter spraying. In this case, patterning may be performed by photoetching or the like after a coating film is formed on the support. It is also possible to fix a patterned mask to the opposite side of the support 10, and then spray a coating liquid, thus allowing the non-masked areas of the opposite side of the support to be coated with the coating liquid.

Under certain conditions, a pattern formed on the opposite side of the support, such as that shown in Fig. 11, can serve as a back coating layer, and eventually contributes to improved running property of the tape.

The other examples are illustrated.

Example 11

<Coating liquid (II) for non-magnetic colored layer>

```
Titanium oxide (white)                          100 parts

Vinyl chloride resin containing metal sulfonate

(MR-110 manufactured by Nippon Zeon Co., Ltd.)    6 parts

Polyesterpolyurethane resin

(XE-1 manufactured by Takeda Chemical

Industries, Ltd.)                                 3 parts

Cyclohexanone                                    30 parts

Methylethylketone                               20 parts

Toluene                                          20 parts
```

The above ingredients are kneaded and dispersed.

The coating liquid (II) for the non-magnetic colored layer is applied onto the 14.0 μm-thick polyethylene terephthalate support by the gravure coating method (using a roll coater on which a prescribed pattern is engraved), and dried to a dry thickness of 1.5 μm. On the so-formed non-magnetic colored layer, the coating liquid for the magnetic recording layer stated above is applied by means of an extrusion coater, followed by drying and calendering, thereby to obtain a 2.0 μm-thick magnetic recording layer. The resultant is cut into a tape with a width of 1/2 inch or 8 mm.

Example 12

Example 11 is repeated with proviso that the gravure coating method is replaced with an ink jet method, where a prescribed pattern is provided with the coating liquid (II) for the non-magnetic colored layer by using a special nozzle.

Example 13

Example 12 is repeated with proviso that the magnetic coating composition is applied onto the prescribed pattern of the non-magnetic colored layer when the magnetic coating composition is wet.

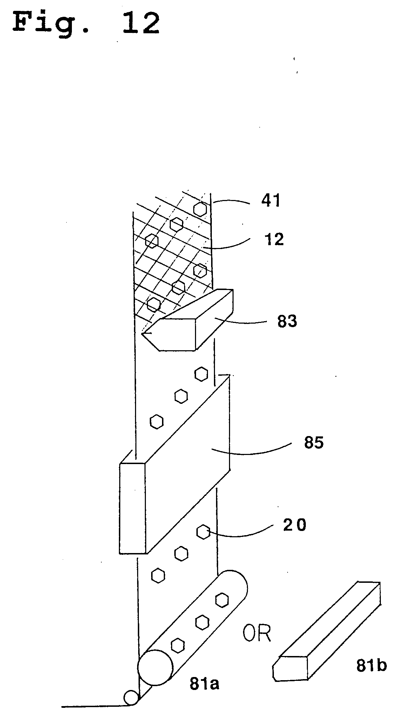

A schematic view of the preparing method is shown in Fig. 12. In Fig. 12, a prescribed pattern is coated onto a support by a gravure roll 81a or an ink jet unit 81b. A drying means 85 is omitted in Example 13. A magnetic layer is coated on the provided pattern by an extrusion coater 83.

Example 14

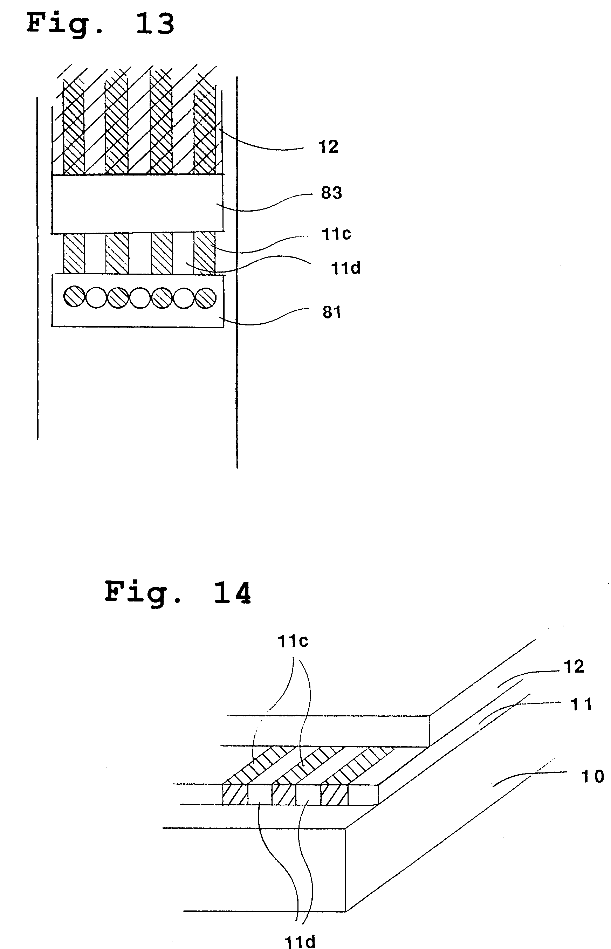

The non-magnetic colored layer coating liquid (I) and (II) are coated side by side alternatively to provide stripes pattern on the 14.0 μm-thick polyethylene terephthalate support, and then a magnetic layer is coated thereon as shown in Figs. 13 and 14. Colored stripes 11c and 11d are provided on the support and a magnetic layer 12 is provided thereon.

Example 15

A 14.0 μm-thick polyethylene terephthalate support at a side of a magnetic layer is provided by an emboss treatment to prepare a relief pattern, and a magnetic layer is provided thereon. The sectional view of the resulted magnetic tape is shown in Fig. 10.

Example 16

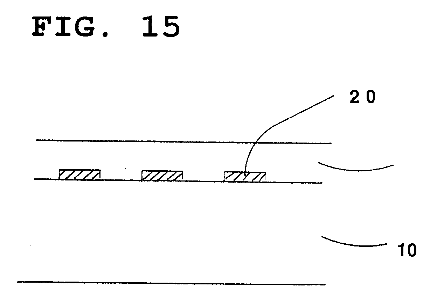

A thin film pattern is provided on a support at a side of a magnetic layer by means of vacuum vaporization, spattering or plating, and a magnetic layer is provided thereon. The sectional view of the resulted magnetic tape is shown in Fig. 15.

Example 17

The coating liquid (I) for the non-magnetic colored layer is applied onto the 14.0 μm-thick polyethylene terephthalate support by the gravure coating method (using a roll coater on which a prescribed pattern is engraved), and the coating liquid (II) for the non-magnetic colored layer is coated thereon, and the coating liquid for the magnetic recording layer as stated above is applied by means of an extrusion coater, followed by drying and calendering, thereby to obtain a 2.0 μm-thick magnetic recording layer. The resultant is cut into a tape with a width of 1/2 inch or 8 mm.

Example 18

The coating liquid (I) for the non-magnetic colored layer is applied onto the 14.0 μm-thick polyethylene terephthalate support by an ink jet method, where a prescribed pattern is provided by using a special nozzle, and the coating liquid (II) for the non-magnetic colored layer is coated thereon, and the coating liquid for the magnetic recording layer as stated above is applied by means of an extrusion coater, followed by drying and calendering, thereby to obtain a 2.0 μm-thick magnetic recording layer. The resultant is cut into a tape with a width of 1/2 inch or 8 mm.

Example 19

The coating liquid (I) for the non-magnetic colored layer is applied onto the 14.0 μm-thick polyethylene terephthalate support by an extrusion coater to provide a drop pattern, and the coating liquid (II) for the non-magnetic colored layer is coated thereon, and the coating liquid for the magnetic recording layer as stated above is applied by means of an extrusion coater, followed by drying and calendering, thereby to obtain a 2.0 μm-thick magnetic recording layer. The resultant is cut into a tape with a width of 1/2 inch or 8 mm.

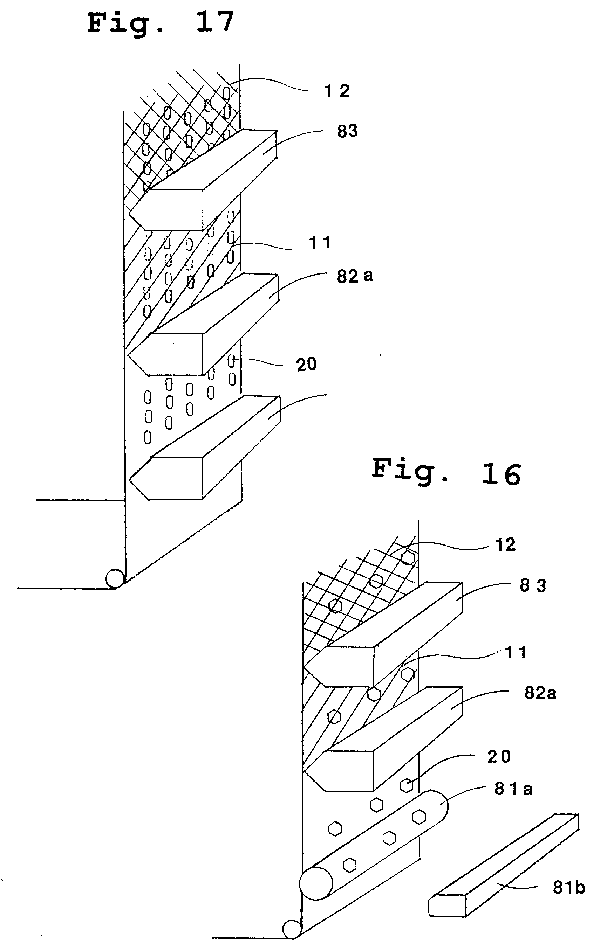

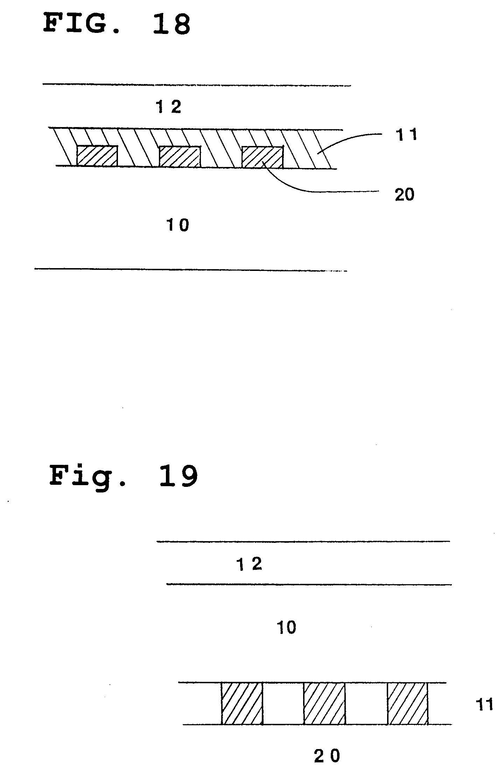

Fig. 16 or 17 is a schematic view of the preparation method of the Examples 17 to 19, and Fig. 18 is a sectional view of the obtained recording media according to these Examples.

Example 20

A thin film pattern is prepared on a support at a side of a magnetic layer is provided by means of vacuum vaporization, spattering or plating onto the 14.0 μm-thick polyethylene terephthalate support, and then the coating liquid (I) or (II) for the non-magnetic colored layer is applied onto the 14.0 μm-thick polyethylene terephthalate support by an extrusion coater thereon, and the coating liquid for the magnetic recording layer as stated above is applied by means of an extrusion coater, followed by drying and calendering, thereby to obtain a 2.0 μm-thick magnetic recording layer. The resultant is cut into a tape with a width of 1/2 inch or 8 mm.

Example 21

The pattern is dyed onto the 14.0 μm-thick polyethylene terephthalate support and the coating liquid (II) for the non-magnetic colored layer is coated thereon, and the coating liquid for the magnetic recording layer as stated above is applied by means of an extrusion coater, followed by drying and calendering, thereby to obtain a 2.0 μm-thick magnetic recording layer. The resultant is cut into a tape with a width of 1/2 inch or 8 mm.

Example 22

In Example 11, the magnetic recording layer is provided on an opposite side of the patterned side of the support but not on the patterned side.

Example 23

In Example 14, the magnetic recording layer is provided on an opposite side of the stripe patterned side of the support but not on the patterned side.

Example 24

In Example 15, the magnetic recording layer is provided on an opposite side of the support having the relief pattern by emboss treatment but not on the patterned side.

Example 25

In Example 16, the magnetic recording layer is provided on an opposite side of the support having the thin film pattern but not on the patterned side.

Example 26

In Example 17, the magnetic recording layer is provided on an opposite side of the support having the non-magnetic colored layers but not on the side having colored layers.

Example 27

In Example 19, the magnetic recording layer is provided on an opposite side of the support having the drop pattern but not on the patterned side.

Example 28

In Example 20, the magnetic recording layer is provided on an opposite side of the support having the thin film pattern prepared by means of vacuum vaporization, spattering or plating but not on the patterned side.

Example 27

In Example 21, the dyed pattern is provided on a different side from that having the colored layer of non-magnetic coloring liquid (II) and the magnetic recording layer.

In case that a pattern is provided on a different side from that having a magnetic layer, the pattern does not give an irregular surface but an even surface.

Other embodiment of the invention are listed below.

1. A magnetic tape comprising a non-magnetic support and provided on it one side a magnetic recording layer, wherein said magnetic tape has a prescribed pattern that is recognizable from the other side of said support.

2. A cassette comprising a magnetic tape capable of magnetically recording a prescribed signal and a cartridge housing said magnetic tape, wherein said magnetic tape comprises a non-magnetic support and a magnetic recording layer formed on its one side; said magnetic tape having a prescribed pattern that is recognizable from the other side of said non-magnetic support.

3. A magnetic tape comprising a non-magnetic support and a magnetic recording layer formed on its one side; said magnetic tape being provided, between said non-magnetic support and said magnetic recording layer, with a prescribed pattern that is recognizable from the other side of said non-magnetic support.

4. A magnetic tape comprising a non-magnetic support and a magnetic recording layer formed on its one side; said magnetic tape being provided, between said non-magnetic support and said magnetic recording layer, with a prescribed pattern of a thin film that is recognizable from the other side of said non-magnetic support.

5. A magnetic tape comprising a non-magnetic support and a magnetic recording layer formed on its one side; said magnetic tape being provided, between said non-magnetic support and said magnetic recording layer, with a prescribed pattern of a colored layer that is recognizable from the other side of said non-magnetic support.

6. A magnetic tape comprising a non-magnetic support and a magnetic recording layer formed on its one side; said magnetic tape being provided, between said non-magnetic support and said magnetic recording layer, with a prescribed pattern of a non-magnetic colored layer that is recognizable from the other side of said non-magnetic support.

7. A magnetic tape comprising a non-magnetic support and a magnetic recording layer formed on its one side; said magnetic tape being provided, on said non-magnetic support with an prescribed embossed pattern that is recognizable from the other side of said non-magnetic support.

8. A magnetic tape comprising a non-magnetic support and a magnetic recording layer formed on its one side; said magnetic tape being provided with a prescribed pattern that is recognizable from the other side of said non-magnetic support, and a colored layer of a different color than the pattern in this order between said non-magnetic support and said magnetic recording layer.

9. A magnetic tape comprising a non-magnetic support and a magnetic recording layer formed on its one side; said magnetic tape being provided with a prescribed pattern of a non-magnetic colored layer that is recognizable from the other side of said non-magnetic support, and another colored layer of a different color than the pattern in this order between said non-magnetic support and said magnetic recording layer.

10. A magnetic tape comprising a non-magnetic support and a magnetic recording layer formed on its one side; said magnetic tape being provided with a prescribed pattern of a thin film that is recognizable from the other side of said non-magnetic support, and a colored layer of a different color than the pattern in this order between said non-magnetic support and said magnetic recording layer.

11. A magnetic tape comprising a non-magnetic support and a magnetic recording layer formed on its one side; said magnetic tape being provided with a prescribed pattern on the non-magnetic support at a different side from that having a magnetic recording layer.

12. A magnetic tape comprising a non-magnetic support and a magnetic recording layer formed on its one side; said magnetic tape being provided with a prescribed pattern of a non-magnetic colored layer on the non-magnetic support at a different side from that having a magnetic recording layer.

13. A magnetic tape comprising a non-magnetic support and a magnetic recording layer formed on its one side; said magnetic tape being provided with a prescribed embossed pattern on the non-magnetic support at a different side from that having a magnetic recording layer.

14. A magnetic tape comprising a non-magnetic support and a magnetic recording layer formed on its one side; said magnetic tape being provided with a prescribed pattern of a thin film on the non-magnetic support at a different side from that having a magnetic recording layer.

15. A magnetic tape comprising a non-magnetic support and a magnetic recording layer formed on its one side; said magnetic tape being provided with a prescribed pattern that is recognizable from the other side of said non-magnetic support on the non-magnetic support at a different side from that having a magnetic recording layer, and a colored layer between said non-magnetic support and said magnetic recording layer.

16. A magnetic tape comprising a non-magnetic support and a magnetic recording layer formed on its one side; said magnetic tape being provided with a prescribed pattern of a non-magnetic colored layer that is recognizable from the other side of said non-magnetic support on the non-magnetic support at a different side from that having a magnetic recording layer, and a colored layer between said non-magnetic support and said magnetic recording layer.

17. A magnetic tape comprising a non-magnetic support and a magnetic recording layer formed on its one side; said magnetic tape being provided with a prescribed embossed pattern that is recognizable from the other side of said non-magnetic support on the non-magnetic support at a different side from that having a magnetic recording layer, and a colored layer between said non-magnetic support and said magnetic recording layer.

18. A magnetic tape comprising a non-magnetic support and a magnetic recording layer formed on its one side; said magnetic tape being provided with a prescribed pattern of a thin film that is recognizable from the other side of said non-magnetic support on the non-magnetic support at a different side from that having a magnetic recording layer, and a colored layer between said non-magnetic support and said magnetic recording layer.

## Claims

1. A magnetic tape having a non-magnetic support, a magnetic recording layer provided thereon and a non-magnetic colored layer provided adjacently to said non-magnetic support, wherein said non-magnetic colored layer is colored in a hue different from said magnetic recording layer.

2. A magnetic tape of claim 1 wherein said non-magnetic colored layer contains a white pigment and a color pigment or a color dye.

3. A tape cassette consisting of a magnetic tape to record magnetically prescribed signals and a cassette case to house the magnetic tape, wherein said magnetic tape has a non-magnetic support, a magnetic recording layer provided on the non-magnetic support and a non-magnetic colored layer provided adjacently to the non-magnetic support, and said non-magnetic colored layer is colored in a hue different from said magnetic recording layer.

4. A tape cassette of claim 3 wherein said non-magnetic colored layer contains a white pigment and a color pigment or a color dye.

5. A tape cassette for video recording consisting of a magnetic tape to record magnetically prescribed signals and a cassette case to house the magnetic tape, wherein said magnetic tape has a non-magnetic support, a magnetic recording layer provided on the non-magnetic support and a non-magnetic colored layer provided adjacently to the non-magnetic support, and said non-magnetic colored layer is colored in a hue different from said magnetic recording layer.

6. A tape cassette for video recording of claim 5 wherein said non-magnetic colored layer contains a white pigment and a color pigment or a color dye.

7. A tape cassette for video recording consisting of a magnetic tape to record magnetically prescribed signals and a cassette case to house the magnetic tape, wherein magnetic tape has a non-magnetic support, a magnetic recording layer provided on the non-magnetic support and a non-magnetic colored layer provided between the non-magnetic support and the magnetic recording layer, and said non-magnetic colored layer is colored in a hue different from said magnetic recording layer.

# Fig. 1

# Fig. 2

# Fig. 3

# Fig. 4

# Fig. 5

# Fig. 6

# Fig. 7

20

12

11  20

20

10

20

# Fig. 8

20          20

12

20

10

# Fig. 9

# Fig. 10

# Fig. 11

# Fig. 12

# Fig. 13

12

83

11c

11d

81

# Fig. 14

11c

12

11

10

11d

# FIG. 15

EP 0 496 559 A2

**Fig. 17**

**Fig. 16**

40

# FIG. 18

# Fig. 19